(19)

Europäisches
Patentamt
European
Patent Office
Office européen
des brevets

(11) **EP 4 212 930 A1**

(12) **EUROPEAN PATENT APPLICATION**

(43) Date of publication:
**19.07.2023 Bulletin 2023/29**

(21) Application number: **22209540.8**

(22) Date of filing: **25.11.2022**

(51) International Patent Classification (IPC):
***G02B 6/44*** *(2006.01)*

(52) Cooperative Patent Classification (CPC):
**G02B 6/4403; G02B 6/441; G02B 6/448**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 IN 202111054820**

(71) Applicant: **Sterlite Technologies Limited
122002 Gurugram, Haryana (IN)**

(72) Inventors:
• **Mishra, Atul
122002 Gurugram (IN)**
• **Singh Panwar, Sourabh
122002 Gurugram (IN)**

(74) Representative: **Petraz, Gilberto Luigi et al
GLP S.r.l.
Viale Europa Unita, 171
33100 Udine (IT)**

(54) **ROLLABLE OPTICAL FIBRE RIBBON WITH INTERMITTENT BONDING**

(57)  The present disclosure relates to an optical fiber cable with a movable ripcord having a core (110) with one or more optical transmission elements (114), a first layer (106) surrounding the core, a second layer (102) surrounding the first layer and one or more ripcords (108) placed between the first layer and the second layer such that one or more ripcords have a degree-of-angular movement less than the angular distance between two consecutive ripcords of the optical fiber cable. The second layer is relatively harder than the first layer and the first layer is deformed radially towards a central axis (X) of the optical fiber cable.

**FIG. 2**

EP 4 212 930 A1

**Description**

**TECHNICAL FIELD**

Embodiments of the present disclosure relate to the field of optical fibre, and more particularly, relates to a rollable optical fibre ribbon with intermittent bonding.

This application claims the benefit of Indian Application No. 202111054820 titled "Rollable Optical Fibre Ribbon With Intermittent Bonding" filed by the applicant on 26/11/2021, which is incorporated herein by reference in its entirety.

**BACKGROUND ART**

With the advancement of science and technology, various modern technologies are being employed for communication purposes. One of the current trends in telecommunications is the use of optical fibers in place of the more conventional transmission media. The advantages of using optical transmission systems for communications are well recognized. Optical waveguides comprising dielectric fibers having a substantially transparent core coaxially surrounded by a cladding material of lower dielectric index may be used to guide and transmit optical signals over long distances in optical communications systems. Another advantage of optical fibers is their larger available bandwidth handling ability that provides the capability to convey larger quantities of information for a substantial number of subscribers via a media of considerably smaller size. Further, because lightwaves are shorter than microwaves, for example, a considerable reduction in component size is possible. As a result, a reduction in material, manufacturing, and packaging costs is achieved.

One such type of optical fiber cables are optical fiber ribbon cables. An optical fiber ribbon includes a body formed from a material that holds the optical fibers together and/or that provides structure that assists in the handling and connecting of the optical fibers of the ribbon to various components or devices.

Optical fibers may be joined together to form a planar (planar) ribbon, which itself may be divided into subunits (e.g., a twelve-core ribbon (a twelve-fiber ribbon) that may be split into 6 optical fiber subunits). A plurality of fiber optic ribbons may be grouped to form ribbon stacks (ribbon stacks) having various sizes and shapes, such as rectangular ribbon stacks or trapezoidal ribbon stacks in which the uppermost fiber optic ribbon and/or the lowermost fiber optic ribbon has fewer optical fibers than those fiber optic ribbons toward the center of the stack. The ribbon stack configuration helps to increase the density of optical elements (e.g., ribbon fibers) within the circular buffer tube and/or the circular fiber optic cable.

Intermittently Bonded Ribbon (IBR) is an example of a rollable optical fiber ribbon and that reduces the diameter of the high fibre density cable. Conventionally, the Intermittently Bonded Ribbon includes a plurality of optical fibers placed in parallel and further adjacent optical fibers are bonded intermittently along a length of the optical fibers by a plurality of connecting portions. Particularly these ribbons are rolled and then bundled to be placed inside a core for making high fiber count cables. Furthermore, the dimensions of the plurality of connecting portions are in the range of a few millimeters.

In order to withstand handling and manufacturing operations, the Intermittently Bonded Ribbons (IBR) must be mechanically strong enough. Moreover, the ribbon must be flexible enough so that it can be easily rolled for packing a large number of ribbons inside the core. However, to meet the above stated requirements, the number of the plurality of connecting portions plays an important role. Currently, there are a few technologies to optimize the number of the plurality of connecting portions with respect to total length of the ribbon to obtain IBRs with good mechanical strength and rollability.

Japanese patent application no. JP5789630B2 titled "Optical unit and optical fiber cable" discloses an optical unit and an optical fiber cable in which the rigidity of the optical unit in the longitudinal direction of the cable can be made uniform to reduce the loss of transmission loss and to prevent the buckling of the film. In particular, Three or more optical fibers are arranged in parallel and two adjacent optical fibers are connected by a connecting portion, and the connecting portion is arranged in the longitudinal direction of the tape core wire. Moreover, optical fiber tape core wire having an intermittent fixing structure provided intermittently and also in the width direction of the tape core wire and the optical fiber tape core wire are housed, and both end edges are overlapped in the circumferential direction.

WIPO patent application no. WO2021133534A1 titled "Intermittently bonded ribbon having bonding regions with multiple materials" discloses an optical fiber ribbon. In particular, the optical fiber ribbon includes a plurality of optical fibers arranged adjacent to each other and a plurality of bonding regions intermittently spaced along a length of the optical fiber ribbon. At each bonding region, at least one bond is formed between two optical fibers of the plurality of optical fibers. Further, the at least one bond comprises a first material applied to outer surfaces of the two optical fibers and a second material applied over the first material.

European patent application no. EP3882680A2 titled "Intermittently bonded ribbon with colored bonds" discloses an intermittently bonded optical fibre ribbon that includes a plurality of optical fibres such that adjacent optical fibre of the plurality of optical fibres is bonded intermittently along the length by a plurality of bonds.

However, there are a number of drawbacks in the currently similar technologies employing a means to provide a rollable optical fibre ribbon with intermittent bonding and optimize the number of the plurality of connecting portions with respect to total length of the ribbon. None of the prior arts stated above mention about optimizing the number of bonds of the optical fiber ribbon for providing the necessary mechanical strength as well as rollability. Moreover, if the optical unit on which the optical fiber ribbon is mounted is bent to a small diameter and the rigidity of the optical unit is strong, it becomes difficult to store the extra length. Further, if the bending property and rigidity are not uniform problems such as local bending and buckling occur.

In light of the above-stated discussion, there exists a need for an optical fibre ribbon that overcomes the above-cited drawbacks of the conventional optical fibre ribbon.

Accordingly, to overcome the disadvantages of the prior art, there is an urgent need for a technical solution that overcomes the above-stated limitations in the prior arts. The present disclosure focuses on optical fiber ribbon with providing a rollable optical fibre ribbon with intermittent bonding.

## SUMMARY OF THE DISCLOSURE

Embodiments of the present disclosure providea rollable optical fibre ribbon with intermittent bonding. In particular, the rollable optical fibre ribbon comprises a plurality of optical fibres. Moreover, the plurality of optical fibres are placed parallel to each other, and the plurality of optical fibres adjacent to each other are bonded intermittently along a length by a plurality of bonded portions. Furthermore, the plurality of bonded portions occupies 3 to 20 % of an area of the rollable optical fibre ribbon of length 1 meter. Further, an area of the plurality of bonded portions is defined as an area projected by the plurality of bonded portions on a plane passing through centres of the plurality of optical fibres of the rollable optical fibre ribbon and extending longitudinally.

According to the first aspect, the area of the rollable optical fibre ribbon is defined as the area projected by the optical fibre ribbon on a plane passing through centres of the plurality of optical fibres of the rollable optical fibre ribbon and extending longitudinally.

In accordance with an embodiment of the present disclosure, each of the plurality of bonded portions is followed by an unbonded portion.

In accordance with an embodiment of the present disclosure, each of the plurality of bonded portions has one of convex shape, concave shape, and flat shape.

According to a second aspect of the present disclosure, the rollable optical fibre ribbon has a height of at most 270 microns.

According to the third aspect of the present disclosure, each of the plurality of bonded portions has a bond width of less than the diameter of each of the plurality of optical fibres in the rollable optical fibre ribbon.

In accordance with an embodiment of the present disclosure, each of the plurality of optical fibers has a primary coating with a thickness of at most 130 microns.

According to the fourth aspect of the present disclosure, each of the plurality of optical fibers has an in-situ modulus of less than 0.6 megapascals.

In accordance with an embodiment of the present disclosure, each of the plurality of optical fibers has an attenuation of at most 0.3 decibels per kilometre at a wavelength of about 1550 nanometers.

According to the fifth aspect of the present disclosure, the plurality of optical fibres is coated with at least one water-swellable material, a fire-resistant material and an identification material.

In accordance with an embodiment of the present disclosure, the rollable optical fibre ribbon has a pitch substantially larger than the diameter of each of the plurality of optical fibres.

In accordance with an embodiment of the present disclosure, the rollable optical fibre ribbon has a pitch substantially the same as the diameter of each of the plurality of optical fibres.

In accordance with an embodiment of the present disclosure, the plurality of bonded portions occupies an area of 9 to 20% of the rollable optical fibre ribbon.

In accordance with an embodiment of the present disclosure, the plurality of bonded portions comprises connecting portions with the width of at least 125 microns.

In accordance with an embodiment of the present disclosure, the plurality of bonded portions occupies an area of 3 to 9% of the rollable optical fibre ribbon.

In accordance with an embodiment of the present disclosure, the plurality of bonded portions comprises connecting portions with the width of at most 125 microns.

In accordance with an embodiment of the present disclosure, the optical fibre cable includes a core, a sheath layer and a plurality of strength members.

In accordance with an embodiment of the present disclosure, the core comprises a plurality of rollable optical fibre ribbons.

In accordance with an embodiment of the present disclosure, the pitch of the rollable optical fibre ribbon is substantially equal to the diameter of each of the plurality of optical fibres.

In accordance with an embodiment of the present disclosure, the number of the plurality of bonded portions is 250 in 1m length of the rollable optical fire ribbon.

The foregoing solutions of the present disclosure are attained by employing a rollable optical fibre ribbon with intermittent bonding.

## BRIEF DESCRIPTION OF DRAWINGS

To describe the technical solutions in the embodiments of the present disclosure or in the prior art more clearly, the following briefly describes the accompanying drawings required for describing the embodiments of the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a diagram illustrating a rollable optical fibre ribbon with intermittent bonding in accordance with one embodiment of the present disclosure;
Fig. 2 is a diagram illustrating a rollable optical fibre ribbon with intermittent bonding in accordance with another embodiment of the present disclosure;
Fig. 3 is a diagram illustrating the rollable optical fibre ribbon with gaps between adjacent optical fibres of a plurality of optical fibres in accordance with yet another embodiment of the present disclosure;
Fig. 4 is a diagram illustrating an exemplary optical fibre cable in accordance with an embodiment of the present disclosure

## REFERENCE LIST

Rollable optical fibre ribbon - 100
Plurality of optical fibres - 102
Plurality of bonded portions - 104
Optical fibre cable - 200
Core - 202
Sheath layer - 204
Plurality of strength members - 206

The rollable optical fibre ribbon is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**

Optical fibre ribbon includes a number of optical fibres secured or embedded substantially parallel to one another by the coating material.

Pitch is the distance between centres of two consecutive optical fibres

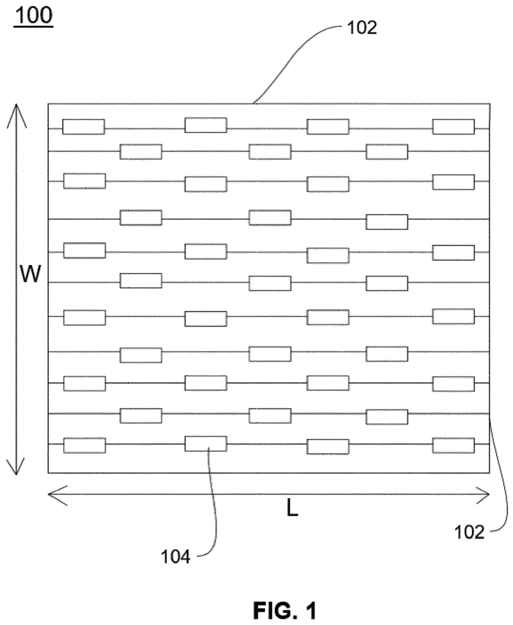

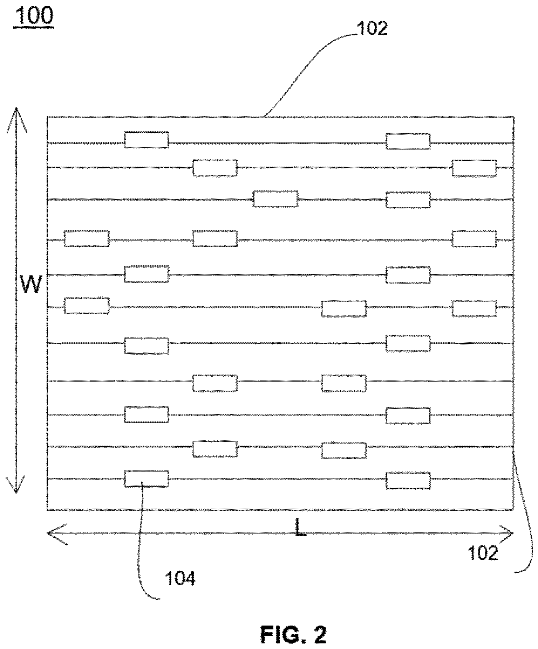

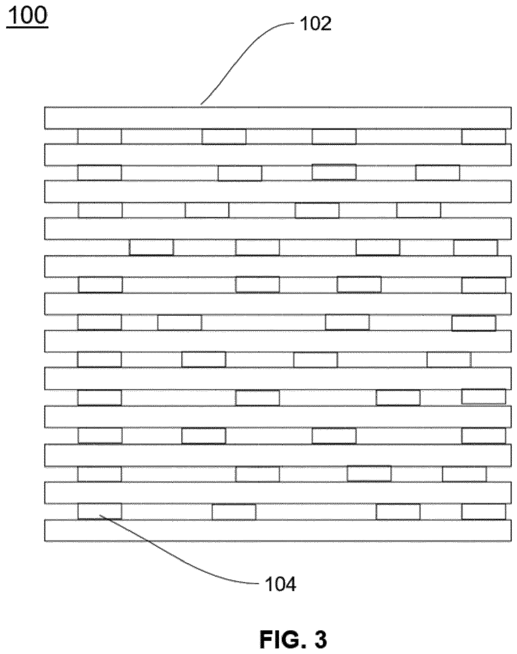

Fig. 1, Fig. 2 and Fig. 3 are diagrams illustrating the rollable optical fibre ribbon in accordance with one or more embodiments of the present disclosure. The optical fibre ribbons are enclosed inside optical fibre cables that require high fibre counts within less installation space. The rollable optical fibre ribbon 100 is mechanically robust. In addition, the rollable optical fibre ribbon 100 is capable to withstand handling and manufacturing operations due to its strong mechanical strength. In addition, the rollable optical fibre ribbon 100 is flexible. The flexibility of the rollable optical fibre ribbon 100 allows the rollable optical fibre ribbon 100 to roll easily.

In accordance with an embodiment of the present disclosure, the rollable optical fibre ribbon 100 includes a plurality of optical fibres 102. In particular, the plurality of optical fibres 102 is placed parallel to each other. The number of the plurality of optical fibres 102 in the rollable optical fibre ribbon is 12. Alternatively, the number of the plurality of optical fibres 102 in the rollable optical fibre ribbon 100 may vary. Moreover, each of the plurality of optical fibers 102 has a primary coating with a thickness of at most 130 microns and an in-situ modulus of less than 0.6 megapascals. Alternatively, the thickness of the primary coating of the plurality of optical fibres 102 may vary. The value of the in-situ modulus of the primary coating of the plurality of optical fibres 102 may vary. Furthermore, each of the plurality of optical fibers 102 has an attenuation of at most 0.3 decibels per kilometre at a wavelength of about 1550 nanometers. The attenuation may vary depending upon the change in wavelength.

In accordance with an embodiment of the present disclosure, the plurality of optical fibres 102 is coated with any one of a water-swellable material, fire-resistant material and an identification material.

In accordance with an embodiment of the present disclosure, the plurality of optical fibres 102 adjacent to each other is bonded intermittently along a length by a plurality of bonded portions 104. In particular, the plurality of bonded portions 104 in a length L of the ribbon occupies 3 to 20 % of an area of the rollable optical fibre ribbon 100 of the length L. The length L of the rollable optical fibre ribbon is about 1 meter. Moreover, an area of the plurality of bonded portions 104 is defined as an area projected by the plurality of bonded portions on a plane passing through centres of the plurality of optical fibers 102 of the rollable optical fibre ribbon 100 and extending longitudinally. Further, the area of the rollable optical fibre ribbon 100 is defined as an area projected by the ribbon on a plane passing through centres of the plurality of optical fibers 102 of the rollable optical fibre ribbon 100 and extending longitudinally.

In an example, the plurality of bonded portions 104 occupies an area of 9 to 20% of the rollable optical fibre ribbon 100 when the width of the plurality of bonded portion 104 of the rollable optical fibre ribbon 100 is more than equal to 125 microns.

In another example, the plurality of bonded portions occupies an area of 3 to 9% of the rollable optical fibre ribbon 100 when the width of the plurality of bonded portion 104 of the rollable optical fibre ribbon 100 is less than equal to 125 microns. The width of the connecting portions may vary. Particularly, the connecting portions may have an arbitrary shape depending upon the settling down of the matrix material before the curing process. The area of the plurality of bonded portions 104 is calculated of a shape.

In accordance with an embodiment of the present disclosure, each of the plurality of bonded portions 104 is followed by an un-bonded portion. In particular, Each of the plurality of bonded portions 104 has one of convex shape, concave shape, flat shape or any suitable shape of the like. Further, the shape of the plurality of bonded portions 104 depend upon the properties of matrix material and curing conditions.

The matrix material is used to hold the plurality of optical fibres 102 together in the rollable optical fibre ribbon 100. Particularly, each bond of the plurality of bonded portions 104 has a bond width of less than the diameter of each of the plurality of optical fibres 102 in the rollable optical fibre ribbon 100. Moreover, each bond of the plurality of bonded portions 104 is defined by a bond length and a bond width. Further, the plurality of bonded portions may be arranged in any pattern in the rollable optical fibre ribbon 100. The distance between two bonds of the plurality of bonded portions 104 may be the same. Alternatively, the distance between two bonds of the plurality of bonded portions 104 may be different.

The area of the rollable optical fibre ribbon 100 is calculated as

$$\text{Ribbon Area} = \text{Ribbon width} * 1 \text{ meter}$$

The area of one bond area is calculated as:

$$\text{Area of bond} = \text{Bond width} * \text{Bond Length}$$

The total bond area of the plurality of bonded portions 104 is calculated as:

$$\text{Total bond area} = \Sigma(\text{Area of bond in meter length L of the ribbon})$$

The bond ratio is calculated as:

$$\text{Bond Ratio} = \text{Total Bond area}*100/\text{Ribbon Area}$$

In accordance with an embodiment of the present disclosure, the rollable optical fibre ribbon 100 has a height of at most 270 microns. In alternate embodiments, the height of the rollable optical fibre ribbon 100 may vary.
In one embodiment of the present disclosure, the height of the ribbon is greater than the diameter of each of the plurality of optical fibres if the matrix material is elevated above the surface of the optical fibre.
In another embodiment, the height of the rollable optical fibre ribbon 100 is less than the diameter of each of the plurality of optical fibres 102 if the matrix material is below the surface of the optical fibre.
In accordance with an embodiment of the present disclosure, the optical fibre is a single optical fibre of the plurality of optical fibres 102.
In an example, the width W of the rollable optical fibre ribbon 100 with fibre diameter 250 micrometre is:

$$\text{Width W of 12 fibres} = 12 * 0.25 = 3\text{mm}$$

In another example, the width W of the rollable optical fibre ribbon 100 with fibre diameter 160 micrometre is:

$$\text{Width W of 12 fibres} = 12 * 0.16 = 1.92\text{mm}$$

In yet another example, the width W of the rollable optical fibre ribbon 100 with fibre diameter 200 micrometre is:

$$\text{Width W of 12 fibres} = 12 * 0.20 = 2.4\text{mm}$$

In an example, the number of the plurality of bonded portions 104 is 250 in 1m length of the rollable optical fire ribbon 100. The rollable optical fibre ribbon 100 have 12 fibres of diameter 250 micrometres of each of the plurality of fibres 102 and 250-micron pitch between the each of the plurality of fibres 102. The bond between each of the plurality of fibres 102 is of length 10mm and width 130 microns. The Area of the bond is:

$$\text{Area of the bond} = \text{Number of bonds} * \text{length} * \text{width}$$

$$\text{Area of the bond} = 250 * 10 * 0.13 = 325\text{mm square}$$

$$\text{Width of the rollable optical fibre ribbon 100} = 12 * 0.25 = 3\text{mm}$$

$$\text{Length of the rollable optical fibre ribbon 100} = 1\text{m}$$

$$\text{Area of the rollable optical fibre ribbon } 100 = 3 * 1000 = 3000 \text{meter square}$$

$$\text{Bond Area Ratio} = 325 * 100 / 300 = 11\%$$

In another example, the number of the plurality of bonded portions 104 is 250 in 1m length of the rollable optical fire ribbon 100. The rollable optical fibre ribbon 100 have 12 fibres of diameter 200 micrometres of each of the plurality of fibres 102 and 200-micron pitch between the each of the plurality of fibres 102. The bond between each of the plurality of fibres 102 is of length 10mm and width 140 microns. The Area of the bond is:

$$\text{Area of the bond} = \text{Number of bonds} * \text{length} * \text{width}$$

$$\text{Area of the bond} = 250 * 10 * 0.14 = 350 \text{mm square}$$

$$\text{Width of the rollable optical fibre ribbon } 100 = 12 * 0.20 = 2.4 \text{mm}$$

$$\text{Length of the rollable optical fibre ribbon } 100 = 1 \text{m}$$

$$\text{Area of the rollable optical fibre ribbon } 100 = 2.4 * 1000 = 3000 \text{meter square}$$

$$\text{Bond Area Ratio} = 350 * 100 / 2400 = 15\%$$

In accordance with an embodiment of the present disclosure, the pitch of the rollable optical fibre ribbon 100 is substantially equal to the diameter of each of the plurality of optical fibres 102. The adjacent optical fibers are in contact with each other in the rollable optical fibre ribbon 100. Alternately, the rollable optical fibre ribbon 100 has gaps between adjacent optical fibres of the plurality of optical fibres 102.

The rollable optical fibre ribbon 100 has a pitch substantially larger than the diameter of each of the plurality of optical fibres 102. Particularly, the pitch of the rollable optical fibre ribbon 100 is equal to the diameter of the optical fibre if the adjacent optical fibers are in contact with each other. Further, the pitch of the rollable optical fibre ribbon 100 is greater than the diameter of the optical fibre if there is a gap between adjacent optical fibres of the plurality of optical fibres 102.

In accordance with an embodiment of the present disclosure, the rollable optical fibre ribbon 100 may be coated with water-swellable yarn or fire-resistant material or any identification material.

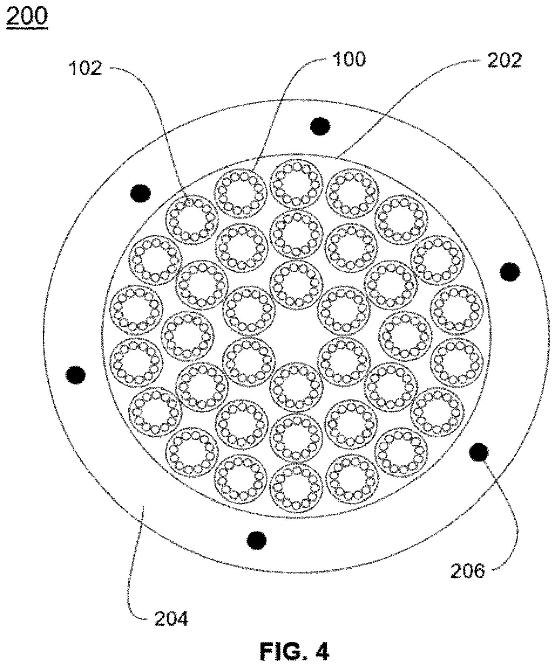

Fig. 4 is a diagram illustrating an exemplary optical fibre cable in accordance with an embodiment of the present disclosure. The optical fibre cable 200 is a high fibre count cable. In particular, the optical fibre cable 200 includes a core 202, a sheath layer 204 and a plurality of strength members 206. Moreover, the sheath layer 204 surrounds the core 202. Further, the sheath layer 204 is the outermost layer of the optical fibre cable 200 providing protection to the optical fibre cable 200 from environmental conditions. The plurality of strength members 206 is embedded inside the sheath layer 204 along the length of the optical fibre cables 200. And, the strength member 206 provides improved mechanical strength and protection from environmental conditions such as but may not be limited to rainfall, snowfall, wind, and sunlight.

In accordance with an embodiment of the present disclosure, the core 202 includes a plurality of rollable optical fibre ribbons. Each of the plurality of rollable optical fibre ribbons corresponds to the rollable optical fibre ribbon 100. Particularly, the plurality of rollable optical fibre ribbons is rolled and bundled together to place inside the core 202 of the optical fibre cable 200. Moreover, the plurality of rollable optical fibre ribbons is mechanically robust enough to withstand handling and manufacturing operations. Further, each of the plurality of rollable optical fibre ribbons is also flexible and may be rolled easily for packing a large number of the plurality of rollable optical fibre ribbons in the core 202 of the optical fibre cable 200. Additionally, the area of bonds of the plurality of bonded portions 104 of the rollable optical fibre ribbon 100 is optimized to obtain strong mechanical strength and rollability.

As illustrated in Fig. 4, the number of the plurality of optical fibres 102 in the core 202 of the optical fibre cable 200 is 432. A number of the plurality of optical fibres 102 in the core 202 of the optical fibre cable 200 maybe 6912.

Alternatively, the number of the plurality of optical fibres 102 in the core 202 of the optical fibre cable 200 may vary. Further, the optical fibre cable 200 has a high packing density and one or more loose tubes containing a plurality of optical fiber ribbons 100.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practise of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above-described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An optical fiber cable (100, 200, 300), **characterized in that**:

    a core (110) having one or more optical transmission elements (114);
    a first layer (106) surrounding the core (110);
    a second layer (102) surrounding the first layer (106), wherein the second layer (102) is relatively harder than the first layer (106); and
    one or more ripcords (108) placed between the first layer (106) and the second layer (102) such that the one or more ripcords (108) have a degree of angular movement ($D_f$) less than $\pm d$;
    wherein d is an angular distance between two consecutive rip cords of the optical fiber cable.

2. The optical fiber cable (100, 200, 300) as claimed in claim 1, wherein a force required for the angular movement of the one or more ripcords (108) is less than 5N.

3. The optical fiber cable (100, 200, 300) as claimed in claim 1, wherein the first layer (106)is defined by a first shore D hardness of less than or equal to 20.

4. The optical fiber cable (100, 200, 300) as claimed in claim 1, wherein the second layer (102)is defined by a second shore D hardness of greater than or equal to 40.

5. The optical fiber cable (100, 200, 300) as claimed in claim 1, wherein the one or more rip cords (108) have the angular movement of less than 180° in 1 meter of the optical fiber cable.

6. The optical fiber cable (100, 200, 300) as claimed in claim 1, wherein the one or more rip cords (108) have the angular movement of less than 45° in 1 meter of the optical fiber cable.

7. The optical fiber cable (100, 200, 300) as claimed in claim 1, wherein the first layer (106) is deformed radially towards a central axis (X) of the optical fiber cable.

8. The optical fiber cable (100, 200, 300) as claimed in claim 1, wherein the first layer (106)is deformed in vicinity of the one or more ripcords (108).

9. The optical fiber cable (100, 200, 300) as claimed in claim 7, wherein deformation (116) of the first layer (106) is equal to or greater than a diameter of the one or more ripcords (108).

10. The optical fiber cable (100, 200, 300) as claimed in claim 1, wherein the second layer (102) is configured to embed one or more strength members (104).

11. The optical fiber cable (100, 200, 300) as claimed in claim 1, wherein the one or more strength members 104 is made of FRP (Fiber Reinforced Plastic), ARP (Aramid-Reinforced Plastic) or any other suitable dielectric/strength material.

12. The optical fiber cable (100, 200, 300) as claimed in claim 1, wherein the one or more strength members (104) are coated with EAA (Ethylene Acrylic Acid) or EVA (Ethylene-Vinyl Acetate) coating.

13. The optical fiber cable (100, 200, 300) as claimed in claim 1, wherein the one or more strength members (104) is a central strength member.

14. The optical fiber cable (100, 200, 300) as claimed in claim 1, wherein the ripcords (108) have a flat shape, monochord, cabled structure depending on user requirement.

15. The optical fiber cable (100, 200, 300) as claimed in claim 1, wherein the one or more optical transmission elements (114) are encapsulated in one or more buffer tubes (112) in the core (110).

**FIG. 1**

**FIG. 2**

100

102

104

**FIG. 3**

200

FIG. 4

Europäisches
Patentamt

European
Patent Office

Office européen
des brevets

# EUROPEAN SEARCH REPORT

Application Number

EP 22 20 9540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/273427 A1 (TANAKA HIROKI [JP] ET AL) 27 September 2018 (2018-09-27) * paragraphs [0002], [0033], [0041], [0085], [0093], [0096], [0106], [0141]; figures 1-5,7,11 * ----- | 1-5,7-15 | INV. G02B6/44 |
| X | US 2014/016905 A1 (TANABE KENGO [JP] ET AL) 16 January 2014 (2014-01-16) * paragraphs [0025], [0027], [0032], [0069], [0070]; figures 1,6 * ----- | 1-4,8, 10-15 | |
| X | US 2017/219792 A1 (DEBBAN HAROLD P [US] ET AL) 3 August 2017 (2017-08-03) * paragraph [0032]; figure 3 * ----- | 1 | |
| X | US 2014/112631 A1 (NAMAZUE AKIRA [JP] ET AL) 24 April 2014 (2014-04-24) * paragraph [0027]; figures 1,2 * ----- | 1 | |
| A | WO 2021/084640 A1 (FUJIKURA LTD [JP]) 6 May 2021 (2021-05-06) * figures 5A,7,8 * ----- | 3,9 | TECHNICAL FIELDS SEARCHED (IPC) G02B |

The present search report has been drawn up for all claims

| Place of search | Date of completion of the search | Examiner |
|---|---|---|
| Berlin | 1 June 2023 | Verdrager, Véronique |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

### ANNEX TO THE EUROPEAN SEARCH REPORT
### ON EUROPEAN PATENT APPLICATION NO.

EP 22 20 9540

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2023

| Patent document cited in search report | | Publication date | Patent family member(s) | | Publication date |
|---|---|---|---|---|---|
| US 2018273427 | A1 | 27-09-2018 | CN | 108369324 A | 03-08-2018 |
| | | | EP | 3385765 A1 | 10-10-2018 |
| | | | JP | 6490805 B2 | 27-03-2019 |
| | | | JP | WO2017094560 A1 | 31-05-2018 |
| | | | TW | 201723536 A | 01-07-2017 |
| | | | US | 2018273427 A1 | 27-09-2018 |
| | | | WO | 2017094560 A1 | 08-06-2017 |
| US 2014016905 | A1 | 16-01-2014 | CN | 102822711 A | 12-12-2012 |
| | | | JP | 4968754 B1 | 04-07-2012 |
| | | | JP | 2012208443 A | 25-10-2012 |
| | | | KR | 20120125609 A | 16-11-2012 |
| | | | TW | 201239437 A | 01-10-2012 |
| | | | US | 2014016905 A1 | 16-01-2014 |
| | | | WO | 2012131811 A1 | 04-10-2012 |
| US 2017219792 | A1 | 03-08-2017 | JP | 6409080 B2 | 17-10-2018 |
| | | | JP | 2017138594 A | 10-08-2017 |
| | | | US | 2017219792 A1 | 03-08-2017 |
| US 2014112631 | A1 | 24-04-2014 | AU | 2012263547 A1 | 19-12-2013 |
| | | | BR | 112013031105 A2 | 06-12-2016 |
| | | | CA | 2837689 A1 | 06-12-2012 |
| | | | CN | 103608710 A | 26-02-2014 |
| | | | EP | 2717082 A1 | 09-04-2014 |
| | | | JP | 5309189 B2 | 09-10-2013 |
| | | | JP | 2012252198 A | 20-12-2012 |
| | | | NZ | 618588 A | 31-07-2015 |
| | | | TW | 201303404 A | 16-01-2013 |
| | | | US | 2014112631 A1 | 24-04-2014 |
| | | | WO | 2012165371 A1 | 06-12-2012 |
| WO 2021084640 | A1 | 06-05-2021 | AU | 2019472715 A1 | 03-03-2022 |
| | | | CA | 3150300 A1 | 06-05-2021 |
| | | | CN | 114008503 A | 01-02-2022 |
| | | | EP | 4053610 A1 | 07-09-2022 |
| | | | KR | 20210153749 A | 17-12-2021 |
| | | | US | 2022269023 A1 | 25-08-2022 |
| | | | WO | 2021084640 A1 | 06-05-2021 |

EPO FORM P0459

For more details about this annex : see Official Journal of the European Patent Office, No. 12/82

**EP 4 212 930 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202111054820
- JP 5789630 B
- WO 2021133534 A1
- EP 3882680 A2